# EUROPEAN PATENT SPECIFICATION

(11) **EP 4 311 003 B1**
(45) Date of publication and mention of the grant of the patent: **06.05.2026**
(21) Application number: 22881213.7
(22) Date of filing: 05.09.2022
(51) Int. Cl.: H01M 10/04, H01M 10/48, H01M 50/238, H01M 50/211, H01M 50/209

(54) **BATTERY MODULE AND BATTERY PACK INCLUDING THE SAME**
BATTERIEMODUL UND BATTERIEPACK DAMIT
MODULE DE BATTERIE ET BATTERIE LE COMPRENANT

(30) Priority: 14.10.2021 KR 20210136427
(43) Date of publication of application: 24.01.2024
(73) Proprietor: LG ENERGY SOLUTION, LTD., Seoul 07335 (KR)
(72) Inventor: LEE, Jung Hoon, Daejeon 34122 (KR); KIM, Dooseung, Daejeon 34122 (KR); YANG, Jaehun, Daejeon 34122 (KR); KIM, Seho, Daejeon 34122 (KR); PARK, Jeong Gi, Daejeon 34122 (KR)
(74) Representative: Goddar, Heinz J.
(86) International application number: PCT/KR2022/013282
(87) International publication number: WO 2023/063583

(56) References cited:
- EP-A1- 3 893 319
- EP-A1- 4 266 468
- WO-A1-2020/179690
- JP-A- 2001 196 103
- KR-A- 20160 069 807
- KR-A- 20170 013 005
- KR-A- 20200 086 172
- KR-A- 20210 112 919

## Description

### [Technical Field]

### CROSS-REFERENCE TO RELATED APPLICATION(S)

This application claims priority to and the benefit of Korean Patent Application No. 10-2021-0136427 filed in the Korean Intellectual Property Office on October 14, 2021.

The present invention relates to a battery module, and more particularly, to a battery module having a battery cell stack accommodated in a module housing. In addition, the present invention relates to a battery pack including the battery module.

### [Background Art]

As the development of technologies and demands for mobile devices are increased, there is a rapidly increasing demand for rechargeable batteries as energy sources. The rechargeable battery is used as an energy source for a power device such as an electric bicycle, an electric vehicle, and a hybrid electric vehicle as well as a mobile device such as a mobile phone, a digital camera, a notebook computer, and a wearable device.

One or two or more secondary batteries are used for one small-scale mobile device, whereas a secondary battery having a high output and a high capacity is required for a middle-scale or large-scale device such as an electric vehicle. To this end, a plurality of battery cells may be electrically connected to constitute a single module. Alternatively, a plurality of modules may be electrically connected to constitute a pack, and the pack may be applied to a product.

For example, the battery module may be configured by surrounding and fixing a stack, which has a plurality of battery cells aligned in one direction, with members that constitute a module housing. In this case, the members, which constitute the module housing, each need to have a rigid structure to prevent the module housing, i.e., the battery module from being deformed in shape by swelling of the battery cell.

EP 4 266 468 A1 relates to a battery module housing a battery cell stack in a module housing.

EP 3 893 319 A1 relates to a battery module with a swelling gauge capable of intuitionally observing a swelling amount of battery cells and a battery pack including the same.

### [Disclosure]

### [Technical Problem]

The present invention has been made in an effort to provide a battery module and a battery pack including the same, which are capable of minimizing a displacement deviation between parts of a battery cell caused by swelling of the battery cell.

However, the object to be achieved by the embodiments of the present invention is not limited to the above-mentioned object but may be variously expanded without departing from the technical spirit of the present invention.

### [Technical Solution]

A battery module according to an embodiment of the present invention includes: a battery cell stack including a plurality of battery cells arranged and stacked in a first direction; a module housing configured to accommodate the battery cell stack; and a deformation prevention structure disposed between the module housing and an outermost peripheral battery cell among the plurality of battery cells. The module housing may include a housing plate adjacent to the outermost peripheral battery cell. The deformation prevention structure may include: a pressing plate fixed to the housing plate and supported on the battery cell stack; at least one flat spring disposed between the pressing plate and the housing plate; and at least one protruding portion supported on the pressing plate and protruding from an outer surface of the housing plate.

The housing plate may include: a cover main body elongated in a longitudinal direction of the outermost peripheral battery cell; and strut parts disposed at two opposite ends of the cover main body, and the pressing plate may include: a pressing main body elongated in the longitudinal direction of the outermost peripheral battery cell at an interval from the cover main body and supported on the outermost peripheral battery cell; and fixing parts disposed at two opposite ends of the pressing main body and fixed to the strut parts of the housing plate.

A rib having at least one accommodation portion may be provided on a surface of the housing plate that faces the pressing plate, and the at least one protruding portion may be configured as a steel ball accommodated in the at least one accommodation portion and partially protruding through an opening formed through the housing plate.

The at least one flat spring is realized by a plurality of flat springs, wherein the plurality of flat springs are disposed at intervals in a longitudinal direction of the housing plate, and the at least one protruding portion is disposed between the plurality of flat springs.

A width of each of adjacent ones of the flat springs in the longitudinal direction of the housing plate, which are disposed at two opposite ends of the housing plate among the plurality of flat springs, may be larger than a width of each of remaining ones of the flat springs in the longitudinal direction of the housing plate.

Each of the plurality of flat springs may include a plurality of crest portions and a trough portion disposed between the plurality of crest portions, the plurality of crest portions may be supported on the housing plate, and the trough portion may be supported on the pressing plate.

The at least one protruding portion may be a plurality of protruding portions, and the plurality of protruding portions may be disposed in a longitudinal direction of the rib.

A support member may be disposed between the pressing plate and a lateral surface of the rib facing the pressing plate and connect the steel ball to the pressing plate, and the support member may include a rubber pad.

A gap prevention member may be disposed between the outermost peripheral battery cell and the pressing plate.

A battery pack according to another embodiment of the present invention includes the above-mentioned battery module.

The battery pack may include a carrier frame configured to accommodate the battery module, the carrier frame may include a beam member adjacent to the housing plate, and a distance between the beam member and the at least one protruding portion may be less than a distance between the beam member and the housing plate.

### [Advantageous Effect]

According to the embodiment, the deformation prevention structure may minimize not only the deformation of the battery cell stack but also the deformation of the module housing when swelling occurs from the battery cell stack.

Therefore, the battery module according to the embodiment may inhibit a deterioration in lifespan of the battery cell.

The effects of the present invention are not limited to the aforementioned effects, and other effects, which are not mentioned above, will be clearly understood by those skilled in the art from the claims.

### [Description of the Drawings]

FIG. 1 is a perspective view illustrating a battery module according to an exemplary embodiment of the present invention.
FIG. 2 is a coupled perspective view illustrating a housing plate and a deformation prevention structure according to the embodiment of the present invention.
FIG. 3 is a rear perspective view of FIG. 2.
FIG. 4 is a top plan view of FIG. 2.
FIG. 5 is a partially exploded perspective view of FIG. 2.
FIG. 6 is a view for explaining a state in which a steel ball of the deformation prevention structure according to the embodiment of the present invention is coupled to an accommodation portion of a housing plate.
FIG. 7 is a view for explaining a support member disposed between the housing plate and a pressing plate of the deformation prevention structure according to the embodiment of the present invention.
FIG. 8 is a view for explaining a battery pack including the battery module according to the embodiment of the present invention.

### [Mode for Invention]

Hereinafter, an embodiment of the present invention will be described in detail with reference to the accompanying drawings so that those skilled in the technical field to which the present invention pertains may easily carry out the embodiment. The present invention may be implemented in various different ways and is not limited to the embodiments described herein.

A part irrelevant to the description will be omitted to clearly describe the present invention, and the same or similar constituent elements will be designated by the same reference numerals throughout the specification.

In addition, a size and thickness of each constituent element illustrated in the drawings are arbitrarily shown for convenience of description, but the present invention is not limited thereto. In order to clearly describe several layers and regions, thicknesses thereof are enlarged in the drawings. In the drawings, the thicknesses of some layers and regions are exaggerated for convenience of description.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly on" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, unless explicitly described to the contrary, the word "comprise/include" and variations such as "comprises/includes" or "comprising/including" will be understood to imply the inclusion of stated elements, not the exclusion of any other elements.

Throughout the specification, the word "in a plan view" means when an object is viewed from above, and the word "in a cross-sectional view" means when a cross section made by vertically cutting an object is viewed from a lateral side.

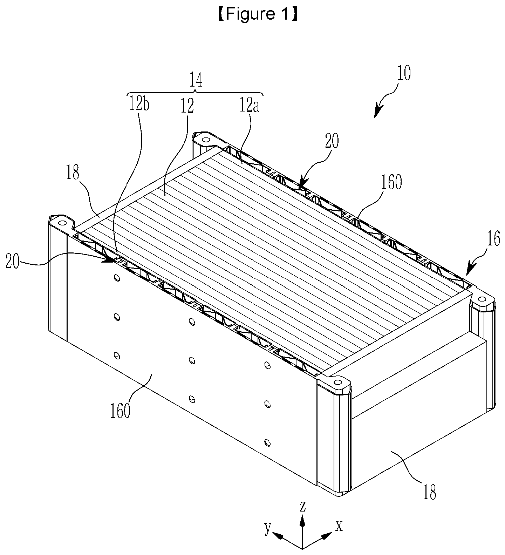

FIG. 1 is a perspective view illustrating a battery module according to an embodiment of the present invention. As illustrated in FIG. 1, a battery module 10 according to an embodiment is configured such that a battery cell stack 14 made by arranging and stacking a plurality of battery cells 12, 12a, and 12b in a first direction x is accommodated in a module housing 16.

In the present embodiment, the battery cell 12 may be configured as a pouch-type secondary battery. For example, the battery cell may be configured such that an electrode assembly is accommodated in an internal space of a pouch, and leads electrically connected to positive and negative electrodes of the electrode assembly are exposed to the outside of the pouch and disposed in a second direction y orthogonal to a first direction x. The pouch may have an approximately rectangular shape elongated in the second direction y. Of course, in the present invention, the battery cell is not necessarily limited to this configuration.

The module housing 16 may include a pair of housing plates (or base plates) 160 disposed to surround the battery cell stack 14, and non-illustrated top and bottom plates. The module housing 16 defines an internal space by coupling the housing plate 160 and the top and bottom plates (e.g., by snap-fit or welding), and the battery cell stack 14 may be accommodated in the internal space. The housing plate 160 and the top and bottom plates may each be made of a metallic material to ensure rigidity of the module housing 16. However, the material is not necessarily limited to the metallic material.

A pair of cover plates 18 may be disposed at two opposite ends of the module housing 16 based on the second direction y. The pair of cover plates 18 shields busbars (not illustrated) configured to electrically connect terminals of the plurality of battery cells 12, and the pair of cover plates 18 is coupled to the module housing 16 and seals the internal space.

In the battery module 10, the housing plate 160 of the module housing 16 is configured to prevent a decrease in reaction force against expansive forces of the battery cells 12, 12a, and 12b in case that the battery cell stack 14 swells when the battery module 10 is applied to a product (e.g., an electric vehicle) and used.

To this end, in the battery module 10 according to the present embodiment, deformation prevention structures 20 are disposed between the outermost peripheral battery cells 12 and 12b of the battery cell stack 14 and the housing plate 160. The deformation prevention structure 20 prevents the battery cell stack and/or the module housing from being deformed by swelling. In other words, the deformation prevention structure 140 minimizes a deviation between a reaction force of the housing plate 160 against the battery cell stack 14 in case that swelling does not occur in the battery cell stack 14 and a reaction force of the housing plate 160 against the battery cell stack 14 in case that swelling occurs in the battery cell stack 14. Therefore, it is possible to prevent the battery cell stack 14 and the housing plate 160 from being deformed by swelling or prevent the battery cell stack 14 or the housing plate 160 from being deformed by swelling.

In the present embodiment, the deformation prevention structure 20 may be configured as an assembly coupled to each of the pair of housing plates 160. Because the assemblies have the same structure, the description will be focused on the housing plate 160 at one side (the housing plate disposed at the left side in FIG. 1), for convenience.

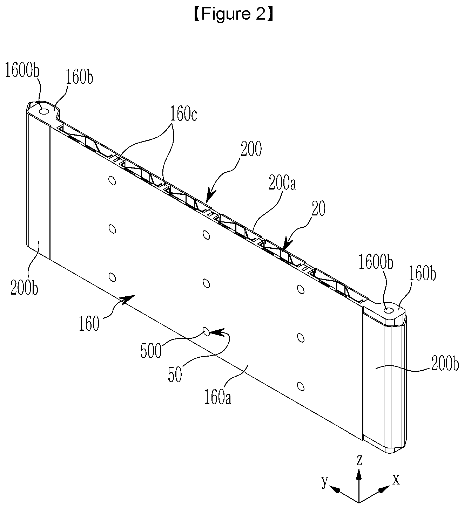

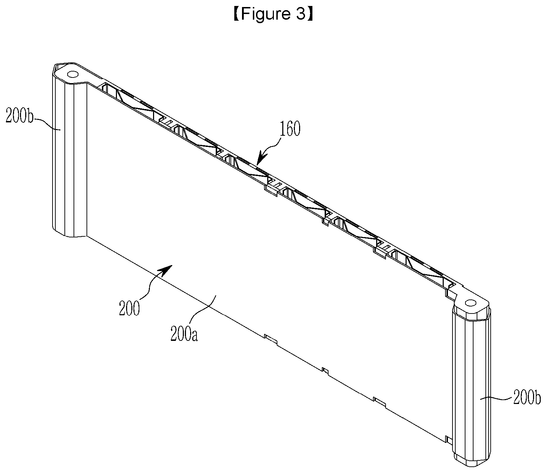

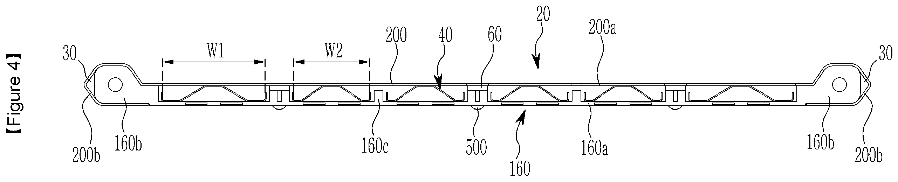

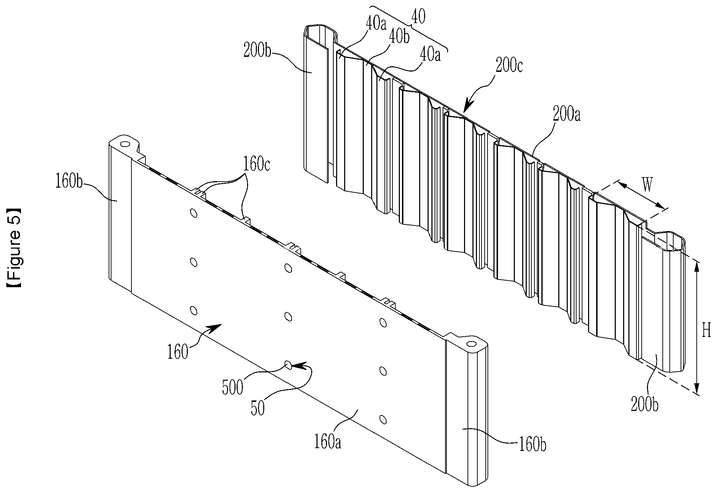

FIG. 2 is a coupled perspective view illustrating the housing plate 160 and the deformation prevention structure 20 according to the embodiment of the present invention, FIG. 3 is a rear perspective view of FIG. 2, FIG. 4 is a top plan view of FIG. 2, and FIG. 5 is a partially exploded perspective view of FIG. 2.

Referring to FIGS. 2 to 5, the housing plate 160 has a shape elongated in a longitudinal direction (or the second direction y) of the battery module 10 or the battery cell stack 14 and is disposed adjacent to the outermost peripheral battery cells 12a and 12b of the battery cell stack 14.

In the present embodiment, the housing plate 160 includes a cover main body 160a elongated in the second direction x, and strut parts 160b disposed at two opposite ends of the cover main body 160a. The cover main body 160a may have any length and thickness and be made of a metallic material (e.g., aluminum). The strut parts 160b may be integrally provided at the two opposite ends of the cover main body 160a, and a through-hole 1600b may be formed in each of the strut parts 160b. A thickness of the strut part 160b is larger than a thickness of the cover main body 160a. The strut part 160b may be provided in the form of a column body having an appropriate volume so that a rigid structure of the housing plate 160 may be maintained. The housing plate 160 may be manufactured by extrusion. One surface of the housing plate 160 (a surface opposite to the battery cell stack) is flat as a whole. The other surface of the housing plate 160 (a surface facing the battery cell stack) is also flat as a whole. The other surface of the housing plate 160 has ribs 160c to be described below in more detail, and the ribs 160c are provided in a third direction z perpendicular to the first direction x and the second direction y.

In the present embodiment, the deformation prevention structure 20 includes a pressing plate 200 coupled to the housing plate 160 and supported on the battery cell stack 14. The pressing plate 200 includes a pressing main body 200a elongated in the longitudinal direction y of the battery cell stack 14, and fixing parts 200b disposed at two opposite ends of the pressing main body 200a and coupled to the strut parts 160b of the housing plate 160. The pressing plate 200 may be made of a metallic material (e.g., stainless steel).

The pressing main body 200a of the pressing plate 200 may have a similar shape to the cover main body 160a of the housing plate 160. The fixing part 200b of the pressing plate 200 may have a curved shape so that a shape corresponding to an outer periphery shape of the strut part 160b is defined in the fixing part 200b. An end of the fixing part 200b may be formed as a free end so that the fixing part 200b has elasticity. The pressing plate 200 may be coupled to the housing plate 160 by coupling the fixing part 200b to the strut part 160b of the housing plate 160 by fitting. A stepped portion may be provided between the pressing main body 200a and the portion of the strut part 160b with which the free end of the fixing part 200b is in close contact.

Therefore, the pressing main body 220a of the pressing plate 200 may be securely disposed to maintain a predetermined interval between the pressing main body 220a and the cover main body 200a of the housing plate 160.

A space portion 30 may be defined between the fixing part 200b and the strut part 160b in the second direction y in the state in which the fixing part 200b is coupled to the strut part 160b. This may provide a margin for preventing stress from being concentrated at the side of the strut part 160b when the housing plate 160 is displaced by swelling of the battery cell stack 14.

The deformation prevention structure 20 includes a flat spring 40 disposed between the pressing plate 200 and the housing plate 160 and configured to apply an elastic force to the pressing plate 200 and the housing plate 160. In the present embodiment, the flat spring 40 is a high-rigidity spring and may be made of metal such as stainless steel or a plastic material such as carbon fiber reinforced plastic (CFRP).

The flat spring 40 has a shape having a plurality of crest portions 40a and a plurality of trough portions 40b disposed between the plurality of crest portions 40a. In the present embodiment, the flat spring 40 has one trough portion 40b disposed between two crest portions 40a. The flat spring 40 may have an approximately quadrangular external shape elongated in the third direction z, i.e., a shape in which a height h in the third direction is larger than a width w in the second direction.

The flat spring 40 is provided as a plurality of flat springs 40, and the plurality of flat springs 40 are disposed at intervals in the longitudinal direction x of the housing plate 160. In the present embodiment, six flat springs 40 are disposed between the housing plate 160 and the pressing plate 200. Among the six flat springs 40, a width w1 of each of the two flat springs 40, which are disposed at two opposite ends of the housing plate 160, i.e., disposed adjacent to the strut parts 160b, is larger than a width w2 of each of the remaining four flat springs 40.

When the flat springs 40 are disposed between the housing plate 160 and the pressing plate 200, each of the flat springs 40 is configured such that the crest portion 40a thereof is supported by being in contact with the cover main body 160a of the housing plate 160, and the trough portion 40b is supported by being in contact with the pressing main body 200a of the pressing plate 200.

The ribs 160c are provided between the flat springs 40. The rib 160c may also have a shape elongated in the third direction z so as to correspond to a shape of the flat spring 40. In the present embodiment, the ribs 160c are disposed between the six flat springs 40. The ribs 160c may be integrated with the cover main body 160a by extruding the housing plate 160.

Meanwhile, a hollow portion 160d, which is opened at two opposite ends thereof, may be formed in the cover main body 160a to reduce the weight of the housing plate 160 and ensure the rigid structure. In the present embodiment, two hollow portions 160d are formed in the cover main body 160a to correspond to the single flat spring 40.

The deformation prevention structure 20 includes protruding portions 50 supported on the pressing plate 200 and protruding from an outer surface of the housing plate, i.e., protruding from a surface of the housing plate that is opposite to the battery cell stack 14. The protruding portion 50 serves to inhibit the deformation of the housing plate 160 when the battery cell stack 14 swells. The protruding portion 50 will be described below.

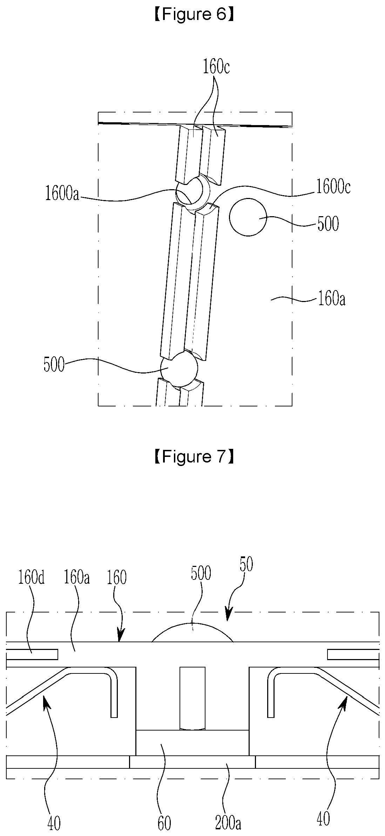

In the present embodiment, the protruding portion 50 is in the form of a steel ball (or ball) 500 having a predetermined diameter. The steel ball 500 is accommodated in an accommodation portion 1600c provided in the rib 160c and partially exposed through an opening 1600a formed through a cover main body 160a of the housing plate 160 (see FIG. 6). That is, in the present embodiment, the protruding portion 50 is configured as a portion of the steel ball 500 partially exposed from the housing plate 160.

Another portion of the steel ball 50, which is opposite to the exposed portion, is supported by the pressing main body 200a of the pressing plate 200. In this case, a support member 60 may be disposed between a lateral surface of the rib 160c and the pressing main body 200a. The support member 60 may compensate for tolerance of the steel ball 50, such that the steel ball 50 may be stably supported on the pressing main body 200a. The support member 60 may be configured as a rubber pad (see FIG. 7).

In the present embodiment, the protruding portion 50, which is implemented by the steel ball 500, may be provided as a plurality of protruding portions 50, for example, three protruding portions 50. The plurality of protruding portions 50 may be disposed at intervals in the third direction z and provided on the odd-numbered ribs 160c among the five ribs 160c. In the present embodiment, a total of nine protruding portions 50 are uniformly disposed on the housing plate 160.

In the deformation prevention structure 20 configured as described above, the flat spring 40 is disposed on the cover main body 160a of the housing plate 160 and provided between the ribs 160c, the steel ball 500 is seated in the accommodation portion 1600c of the rib 160c so as to be partially exposed through the opening 1600a, and the support member 60 is disposed on the lateral surface of the rib 160c while covering the steel ball 500. In this state, the pressing plate 20 couples the fixing part 200b to the strut part 160b of the housing plate 160 by fitting, such that the pressing plate 20 may be assembled with the housing plate 160.

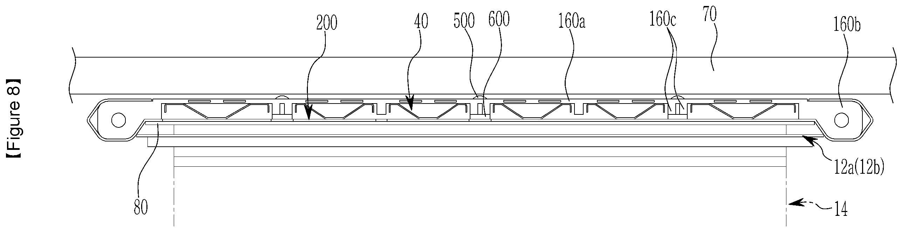

The housing plate 160 assembled with the deformation prevention structure 20 may be coupled to the top and bottom plates to constitute the module housing 16. The module housing 16 with the battery cell stack 14 accommodated in the internal space may be coupled to the cover plate 18 to constitute the battery module 10. In this case, as illustrated in FIG. 8, a gap prevention member 80 may be disposed between the pressing plate 200 of the deformation prevention structure 20 and the outermost peripheral battery cells 12a and 12b of the battery cell stack 14 to prevent the occurrence of a gap. The gap prevention member 80 may be configured as, but not particularly limited to, a pad made of various materials.

FIG. 8 is a view illustrating a battery pack including the battery module 10 according to the embodiment. The battery pack may include a beam member (e.g., vertical beam) 70 that constitutes a carrier frame. At least one battery module 10 may be provided and installed on the carrier frame. When the battery module 10 is installed on the carrier frame, the housing plate 160 may be disposed on the beam member 70 at an interval of several millimeters.

The battery module 10 according to the present embodiment may be applied to and used for a device, such as an electric vehicle, which requires a high-capacity power source. The deformation of the battery module 10 may be minimized even though swelling occurs from the battery cell stack 14.

This is because the flat spring 40 of the deformation prevention structure 20 may exhibit elasticity between the battery cell stack 14 and the housing plate 160 to overcome the deformation of the battery cell even though the amount of deformation of the battery cell caused by swelling of the battery cell stack 14 increases. Moreover, the protruding portion 50 of the deformation prevention structure 20 comes into contact with and is supported by the beam member 70 before the housing plate 160 comes into contact with the beam member 70 even though the housing plate 160 is deformed in the first direction x by swelling, such that the reaction force of the housing plate 160 against swelling of the battery cell stack 14 is not decreased.

The above-mentioned battery module and the battery pack including the battery module may be applied to various devices. Examples of such devices may include transportation means such as an electric bicycle, an electric vehicle, and a hybrid vehicle, but the present invention is not limited thereto, and may be applied to various devices that may use the battery module and the battery pack including the battery module. These configurations may also belong to the scope of the present invention.

Although preferred examples of the present invention have been described in detail hereinabove, the right scope of the present invention is not limited thereto, and is only limited by the appended claims.

### <Description of Reference Numerals>

10: Battery module
12: Battery cell
14: Battery cell stack
16: Module housing
20: Deformation prevention structure
40: Flat spring
50: Protruding portion
160: Housing plate
200: Pressing plate

## Claims

1. A battery module (10) comprising:
a battery cell stack (14) comprising a plurality of battery cells (12, 12a, 12b) arranged and stacked in a first direction (x);
a module housing (16) configured to accommodate the battery cell stack (14); and
a deformation prevention structure (20) disposed between the module housing (16) and an outermost peripheral battery cell (12a, 12b) among the plurality of battery cells (12, 12a, 12b),
wherein the module housing (16) comprises a housing plate (160) adjacent to the outermost peripheral battery cell (12a, 12b), and
wherein the deformation prevention structure (20) comprises:
a pressing plate (200) fixed to the housing plate (160) and supported on the battery cell stack (14);
at least one flat spring (40) disposed between the pressing plate (200) and the housing plate (160); and
at least one protruding portion (50) supported on the pressing plate (200) and protruding from an outer surface of the housing plate (160)
**characterized in that**
the at least one flat spring (40) is a plurality of flat springs (40),
the plurality of flat springs (40) is disposed at intervals in a longitudinal direction (y) of the housing plate (160), and
the at least one protruding portion (50) is disposed between the plurality of flat springs (40).

2. The battery module (10) of claim 1, wherein:
the housing plate (160) comprises: a cover main body (160a) elongated in a longitudinal direction (y) of the outermost peripheral battery cell (12a, 12b); and strut parts (160b) disposed at opposite ends of the cover main body (160a), and
wherein the pressing plate (200) comprises: a pressing main body (160a, 200a, 220a) elongated in the longitudinal direction (y) of the outermost peripheral battery cell (12a, 12b) at an interval from the cover main body (160a) and supported on the outermost peripheral battery cell (12a, 12b); and fixing parts (200b) disposed at opposite ends of the pressing main body (160a, 200a, 220a) and fixed to the strut parts (160b) of the housing plate (160).

3. The battery module (10) of claim 1, wherein:
a rib (160c) having at least one accommodation portion (1600c) is provided on a surface of the housing plate (160) that faces the pressing plate (200), and
the at least one protruding portion (50) is configured as a steel ball accommodated in the at least one accommodation portion (1600c) and partially protruding through an opening formed through the housing plate (160).

4. The battery module (10) of any one of claims 1 to 3, wherein:
a width of each of adjacent ones of the flat springs (40) in the longitudinal direction (y) of the housing plate (160), which are disposed at two opposite ends of the housing plate (160) among the plurality of flat springs (40), is larger than a width of each of remaining ones of the flat springs (40) in the longitudinal direction (y) of the housing plate (160).

5. The battery module (10) of claim 4, wherein:
each of the plurality of flat springs (40) comprises a plurality of crest portions (40a, 40c) and a trough portion (40b) disposed between the plurality of crest portions (40a, 40c),
the plurality of crest portions (40a, 40c) is supported on the housing plate (160), and
the trough portion (40b) is supported on the pressing plate (200).

6. The battery module (10) of claim 3, wherein:
the at least one protruding portion (50) is a plurality of protruding portions (50), and the plurality of protruding portions (50) is disposed in a longitudinal direction (y) of the rib (160c).

7. The battery module (10) of claim 3, wherein:
a support member (60) is disposed between the pressing plate (200) and a lateral surface of the rib (160c) facing the pressing plate (200) and connects the steel ball to the pressing plate (200).

8. The battery module (10) of claim 7, wherein:
the support member (60) comprises a rubber pad.

9. The battery module (10) of claim 1, wherein:
a gap prevention member is disposed between the outermost peripheral battery cell (12a, 12b) and the pressing plate (200).

10. A battery pack comprising the battery module (10) of any one of claims 1 to 9.

11. The battery pack of claim 10, wherein:
the battery pack comprises a carrier frame configured to accommodate the battery module (10),
the carrier frame comprises a beam member (70) adjacent to the housing plate (160), and
a distance between the beam member (70) and the at least one protruding portion (50) is less than a distance between the beam member (70) and the housing plate (160).

## Patentansprüche

1. Ein Batteriemodul (10), umfassend:
einen Batteriezellenstapel (14), der eine Vielzahl von Batteriezellen (12, 12a, 12b) umfasst, die in einer ersten Richtung (x) angeordnet und gestapelt sind;
ein Modulgehäuse (16) zum Aufnehmen des Batteriezellenstapels (14); und
eine Verformungsverhinderungsstruktur (20), die zwischen dem Modulgehäuse (16) und einer äußersten peripheren Batteriezelle (12a, 12b) zwischen den mehreren Batteriezellen (12, 12a, 12b) angeordnet ist,
wobei das Modulgehäuse (16) eine an die äußerste periphere Batteriezelle (12a, 12b) angrenzende Gehäuseplatte (160) umfasst, und
wobei die Verformungsverhinderungsstruktur (20) umfasst:
eine Druckplatte (200), die an der Gehäuseplatte (160) befestigt ist und auf dem Batteriezellenstapel (14) aufliegt;
zumindest eine Flachfeder (40), die zwischen der Druckplatte (200) und der Gehäuseplatte (160) angeordnet ist; und
zumindest einen Vorsprung (50), der auf der Druckplatte (200) abgestützt ist und aus einer Außenfläche der Gehäuseplatte (160) herausragt,
**dadurch gekennzeichnet, dass**
die zumindest eine Flachfeder (40) aus einer Vielzahl von Flachfedern (40) gebildet ist,
die mehreren Flachfedern (40) in Abständen in einer Längsrichtung (y) der Gehäuseplatte (160) angeordnet sind, und
der zumindest eine Vorsprung (50) zwischen der Vielzahl von Flachfedern (40) angeordnet ist.

2. Batteriemodul (10) nach Anspruch 1, wobei:
die Gehäuseplatte (160) umfasst: einen in einer Längsrichtung (y) der äußersten peripheren Batteriezelle (12a, 12b) langgestreckten Deckelhauptkörper (160a); und Strebenabschnitte (160b), die an gegenüberliegenden Enden des Deckelhauptkörpers (160a) angeordnet sind, und
wobei die Druckplatte (200) umfasst: einen Andruck-Hauptkörper (160a, 200a, 220a), der sich in Längsrichtung (y) der äußersten peripheren Batteriezelle (12a, 12b) in einem Abstand vom Deckelhauptkörper (160a) langgestreckt ist und auf der äußersten peripheren Batteriezelle (12a, 12b) abgestützt ist; und Befestigungsteile (200b), die an gegenüberliegenden Enden des Andruck-Hauptkörpers (160a, 200a, 220a) angeordnet und an den Streben (160b) der Gehäuseplatte (160) befestigt sind.

3. Batteriemodul (10) nach Anspruch 1, wobei:
eine Rippe (160c) mit zumindest einem Aufnahmeteil (1600c) an einer der Pressplatte (200) zugewandten Oberfläche der Gehäuseplatte (160) vorgesehen ist, und
der zumindest eine Vorsprung (50) als Stahlkugel ausgebildet ist, die in dem zumindest einen Aufnahmebereich (1600c) aufgenommen ist und teilweise durch eine in der Gehäuseplatte (160) ausgebildete Öffnung ragt.

4. Batteriemodul (10) nach einem der Ansprüche 1 bis 3, wobei:
die Breite jeder der benachbarten Flachfedern (40) in Längsrichtung (y) der Gehäuseplatte (160), die an zwei gegenüberliegenden Enden der Gehäuseplatte (160) unter den mehreren Flachfedern (40) angeordnet sind, größer ist als die Breite jeder der übrigen Flachfedern (40) in Längsrichtung (y) der Gehäuseplatte (160).

5. Batteriemodul (10) nach Anspruch 4, wobei:
jede der mehreren Flachfedern (40) mehrere Scheitelabschnitte (40a, 40c) und einen zwischen den mehreren Scheitelabschnitten (40a, 40c) angeordneten Talabschnitt (40b) umfasst,
die mehreren Kammabschnitte (40a, 40c) auf der Gehäuseplatte (160) abgestützt sind, und
der Talabschnitt (40b) auf der Druckplatte (200) abgestützt ist.

6. Das Batteriemodul (10) nach Anspruch 3, wobei:
der zumindest eine vorstehende Abschnitt (50) eine Vielzahl von vorstehenden Abschnitten (50) ist und die Vielzahl von vorstehenden Abschnitten (50) in einer Längsrichtung (y) der Rippe (160c) angeordnet ist.

7. Batteriemodul (10) nach Anspruch 3, wobei:
ein Stützelement (60) zwischen der Pressplatte (200) und einer der Pressplatte (200) zugewandten Seitenfläche der Rippe (160c) angeordnet ist und die Stahlkugel mit der Pressplatte (200) verbindet.

8. Batteriemodul (10) nach Anspruch 7, wobei:
das Stützelement (60) ein Gummipolster umfasst.

9. Batteriemodul (10) nach Anspruch 1, wobei:
ein Spaltverhinderungselement zwischen der äußersten peripheren Batteriezelle (12a, 12b) und der Andruckplatte (200) angeordnet ist.

10. Ein Batteriepack, das das Batteriemodul (10) nach einem der Ansprüche 1 bis 9 umfasst.

11. Batteriepack nach Anspruch 10, wobei:
der Batteriepack einen Trägerrahmen zum Aufnehmen des Batteriemoduls (10) umfasst,
der Tragrahmen ein an die Gehäuseplatte (160) angrenzendes Trägerelement (70) umfasst, und
ein Abstand zwischen dem Trägerelement (70) und dem zumindest einen vorstehenden Abschnitt (50) kleiner ist als ein Abstand zwischen dem Trägerelement (70) und der Gehäuseplatte (160).

## Revendications

1. Module de batterie (10) comprenant :
un empilement de cellules électrochimiques pour batterie (14) comprenant une pluralité de cellules électrochimiques (12, 12a, 12b) agencées et empilées dans une première direction (x) ;
un boîtier de module (16) configuré pour recevoir l'empilement de cellules électrochimiques pour batterie (14) ; et
une structure de prévention des déformations (20) disposée entre le boîtier de module (16) et la cellule électrochimique périphérique la plus extérieure (12a, 12b) parmi la pluralité de cellules électrochimiques (12, 12a, 12b),
où le boîtier de module (16) comprend une plaque de boîtier (160) adjacente à la cellule électrochimique périphérique la plus extérieure (12a, 12b) et
où la structure de prévention des déformations (20) comprend :
une plaque de pression (200) fixée à la plaque du boîtier (160) et supportée sur l'empilement de cellules électrochimiques pour batterie (14) ;
au moins un ressort plat (40) disposé entre la plaque de pression (200) et la plaque du boîtier (160) ; et
au moins une partie protubérante (50) supportée sur la plaque de pression (200) et faisant saillie depuis une surface externe de la plaque du boîtier (160)
**caractérisé en ce que**
le au moins un ressort plat (40) est une pluralité de ressorts plats (40),
la pluralité de ressorts plats (40) est disposée à intervalles dans une direction longitudinale (y) de la plaque du boîtier (160) et
la au moins une partie protubérante (50) est disposée entre la pluralité de ressorts plats (40).

2. Module de batterie (10) de la revendication 1, où :
la plaque du boîtier (160) comprend : un corps de couverture principal (160a) allongé dans une direction longitudinale (y) de la cellule électrochimique périphérique la plus extérieure (12a, 12b) ; et des parties formant entretoises (160b) disposées à des extrémités opposées du corps de couverture principal (160a) et
où la plaque de pression (200) comprend : un corps de pression principal (160a, 200a, 220a) allongé dans la direction longitudinale (y) de la cellule électrochimique périphérique la plus extérieure (12a, 12b) à un intervalle par rapport au corps de couverture principal (160a) et supporté sur la cellule électrochimique périphérique la plus extérieure (12a, 12b) ; et des pièces de fixation (200b) disposées à des extrémités opposées du corps de pression principal (160a, 200a, 220a) et fixées aux parties formant entretoises (160b) de la plaque du boîtier (160).

3. Module de batterie (10) de la revendication 1, où :
une nervure (160c) dotée d'au moins une partie servant de réceptacle (1600c) est fournie sur une surface de la plaque du boîtier (160) qui fait face à la plaque de pression (200) et
la au moins une partie protubérante (50) est configurée sous la forme d'une bille d'acier logée dans la au moins une partie servant de réceptacle (1600c) et fait en partie saillie au travers d'une ouverture formée au travers de la plaque du boitier (160).

4. Module de batterie (10) de l'une quelconque des revendications 1 à 3, où :
parmi la pluralité de ressorts plats (40), une largeur de chacun des ressorts plats (40) adjacents dans la direction longitudinale (y) de la plaque du boîtier (160) qui sont disposés à deux extrémités opposées de la plaque du boîtier (160) est plus large qu'une largeur de chacun des ressorts plats restants (40) dans la direction longitudinale (y) de la plaque du boîtier (160).

5. Module de batterie (10) de la revendication 4, où :
chacun de la pluralité de ressorts plats (40) comprend une pluralité de parties en crêtes (40a, 40c) et une partie en creux (40b) disposée entre la pluralité de parties en crêtes (40a, 40c),
la pluralité de parties en crêtes (40a, 40c) est supportée sur la plaque du boîtier (160) et
la partie en creux (40b) est supportée sur la plaque de pression (200).

6. Module de batterie (10) de la revendication 3, où :
la au moins une partie protubérante (50) est une pluralité de parties protubérantes (50) et la pluralité de parties protubérantes (50) est disposée dans une direction longitudinale (y) de la nervure (160c).

7. Module de batterie (10) de la revendication 3, où :
un organe de support (60) est disposé entre la plaque de pression (200) et une surface latérale de la nervure (160c) qui fait face à la plaque de pression (200) et connecte la bille d'acier à la plaque de pression (200).

8. Module de batterie (10) de la revendication 7, où :
l'organe de support (60) comprend un tampon de caoutchouc.

9. Module de batterie (10) de la revendication 1, où :
un organe de prévention des écarts est disposé entre la cellule électrochimique périphérique la plus extérieure (12a, 12b) et la plaque de pression (200).

10. Bloc-batterie comprenant le module de batterie (10) de l'une quelconque des revendications 1 à 9.

11. Bloc-batterie de la revendication 10, où :
le bloc-batterie comprend un cadre porteur configuré pour recevoir le module de batterie (10),
le cadre porteur comprend un organe en poutrelle (70) adjacent à la plaque du boîtier (160) et
une distance entre l'organe en poutrelle (70) et la au moins une partie protubérante (50) est inférieure à une distance entre l'organe en poutrelle (70) et la plaque du boîtier (160).
